# EUROPEAN PATENT SPECIFICATION

(11) **EP 0 628 711 B1**
(45) Date of publication and mention of the grant of the patent: **01.04.1998**
(21) Application number: 94201461.4
(22) Date of filing: 24.05.1994
(51) Int. Cl.: F02D 9/02, F02M 23/02

(54) **A throttle mechanism**
Ein Drosselmechanismus
Un mécanisme à étranglement

(30) Priority: 09.06.1993 GB 9311880
(43) Date of publication of application: 14.12.1994
(73) Proprietor: GENERAL MOTORS CORPORATION, Detroit Michigan 48202 (US)
(72) Inventor: Field, Martin John, Stewkley, Leighton Buzzard LU7 0JG (GB)
(74) Representative: Denton, Michael John

(56) References cited:
- DE-A- 4 202 437
- GB-A- 2 245 932
- PATENT ABSTRACTS OF JAPAN vol. 14, no. 549 (M-1055) 6 December 1990 & JP-A-22 033 817 (AISAN IND) 17 September 1990

## Description

This invention relates to a throttle mechanism for an engine of a motor vehicle.

There are numerous designs of throttle mechanisms for engines which are well known to these skilled in the art. These known throttle mechanisms basically comprise a throttle body with a bore therethrough, a shaft extending across the bore and having a flap valve secured thereto, and means for rotating the shaft relative to the throttle body. Generally, the problem associated with these known designs is that for each design of engine, and/or for each application of the throttle mechanism, a different design of throttle mechanism is required in terms of the layout of the throttle mechanism and/or the layout of the elements attached to, or forming part of, the throttle mechanism. Figures 1 to 3 of DE-A-4202437 disclose a throttle mechanism in accordance with the preamble of Claim 1.

It is an object of the present invention to overcome one or more of these disadvantages.

To this end, a throttle mechanism in accordance with the present invention is characterised over DE-A-4202437 by the features specified in the characterising portion of claim 1.

With this arrangement, the throttle body can be secured relative to the engine in one of several orientations by rotating the throttle body through 180° about the longitudinal axis of the shaft and/or the bore. The position of elements attached to the throttle body, such as the throttle linkage, idle air control valve assembly, etc., relative to the engine can therefore easily be altered to meet the necessary layout requirements. As a consequence, one design of throttle body can be used for several different applications.

The present invention will now be described, by way of example, with reference to the accompanying drawings, in which:-
Figure 1 is a plan view of a throttle mechanism in accordance with the present invention;
Figure 2 is an end view of a manifold to which the throttle mechanism of Figure 1 can be attached;
Figure 3 is a plan view of an air horn which is attached to the throttle mechanism of Figure 1;
Figure 4 is a side view in the direction of arrow IV in Figure 1 showing the attachment of the throttle position sensor and the idle air control valve motor but with other features omitted for clarity;
Figure 5 is a side view in the direction of arrow V in Figure 1 showing the fluid heating means and the air horn positioned on the throttle body but with other features omitted for clarity;
Figure 6 is a side view in the direction of arrow VI in Figure 1 showing the throttle linkage and idle adjust means but with other features omitted for clarity;
Figure 7 is a view similar to that of Figure 6 with the positions of the throttle linkage and idle adjust means reversed; and
Figure 8 is a cross-sectional view of the idle adjust means of Figure 1.

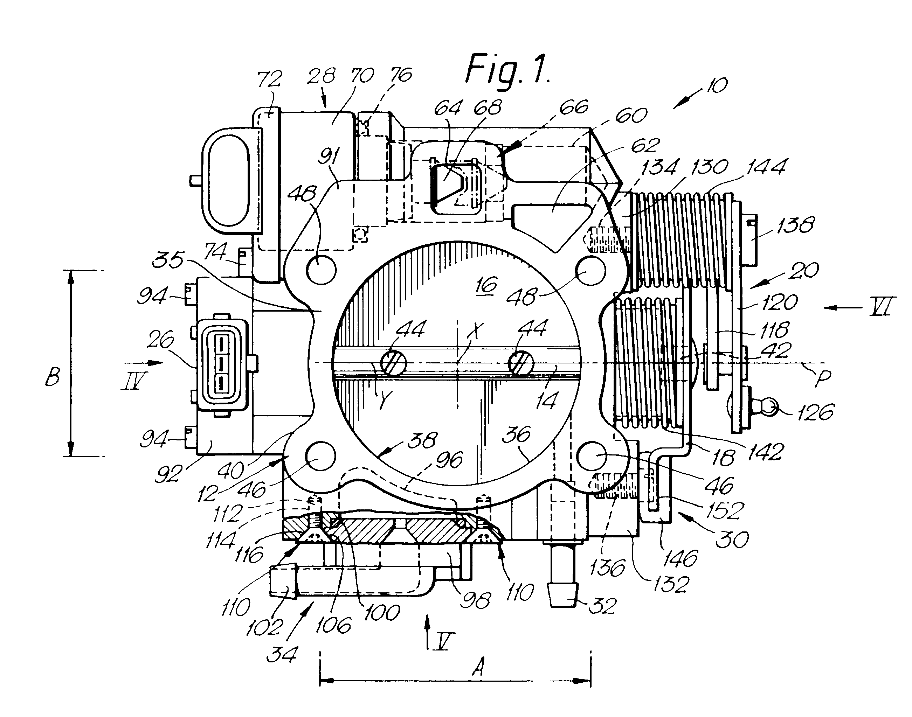

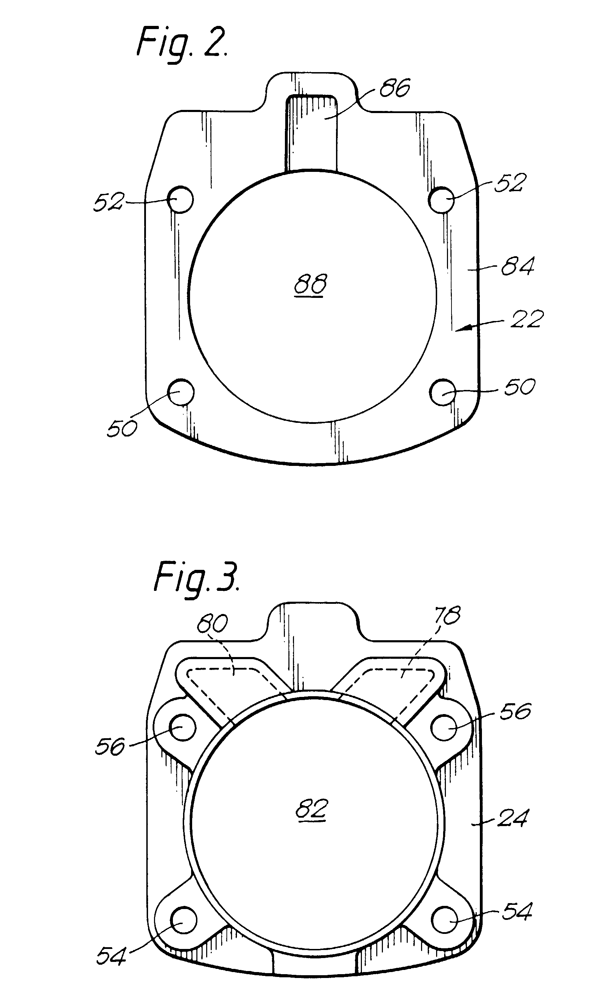

Referring to Figure 1, a throttle mechanism 10 in accordance with the present invention is shown, and comprises a throttle body 12, a shaft 14, a flap valve 16 of the flat butterfly type, and means for rotating the shaft in the form of a lever arm 18 and throttle linkage 20. Other forms of rotating means, such as a DC electric motor, cable, cam or simple lever and stud, may be used. The throttle body 12, in use, is secured between a manifold 22 (Figure 2) and an air horn 24 (Figure 3). The manifold 22 is attached to an engine of a motor vehicle, as is well known to those skilled in the art, and an air filter can be mounted on the opposite side of the air horn 24 to the throttle body 12 usually via a separate duct from a remote air filter housing. Alternatively, the duct and the air horn may be formed in one piece, or the air horn may simply be an extension of the air filter housing. Also attached to the throttle body 12 is a throttle position sensor 26, an idle air control valve assembly 28, an idle adjust means 30, a vacuum connection 32, and fluid heating means 34. The above features are described in more detail below.

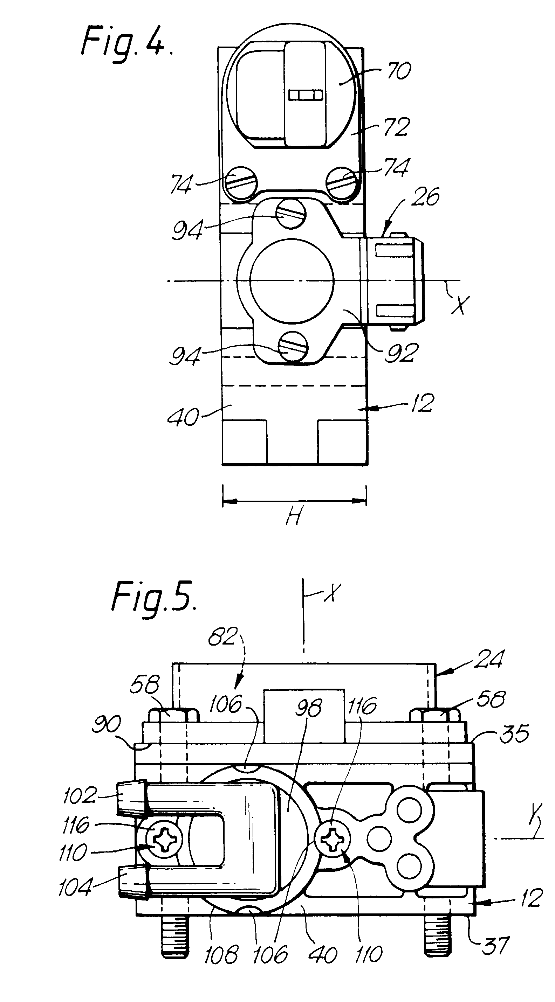

The throttle body 12 has a pair of end faces 35,37 which are substantially planar and parallel to one another and substantially identical, an inner wall 36 which defines a bore 38 which extends through the throttle body from one end face to the other in a longitudinal (height) direction H (Figure 4), and an outer wall 40. The bore 38 has a longitudinal axis X and may have a profile which is straight along its length, or dual spherical, either of which profiles are well known to those skilled in the art. The shaft 14 extends across the bore 38 such that the longitudinal axis Y of the shaft is substantially perpendicular to the longitudinal axis X of the bore. Both ends of the shaft 14 are mounted in the throttle body 12 by way of bearings (not shown) which allow the shaft to rotate about its longitudinal axis Y relative to the throttle body. One end 42 of the shaft 14 extends beyond the outer wall 40 and is secured to the lever arm 18. The other end of the shaft 14 also extends beyond the outer wall 40 and is associated with the throttle position sensor 26. The flap valve 16 is secured to the shaft 14 (by screws 44 or any other suitable means) and can move (on rotation of the shaft) between a fully open position, in which the flap valve forms virtually no restriction on the flow of air/fuel through the bore 38, and a substantially closed position in which the flap valve substantially closes the bore for idle operation of the engine.

The throttle body 12 has two pairs of apertures 46,48 passing therethrough from one end face to the other 35,37, and the manifold 22 and air horn 24 have corresponding pairs of apertures 50,52 and 54, 56 respectively. The apertures 50,52 in the manifold 22 are internally threaded and securing means, for example, bolts 58 (Figure 5), can extend through the apertures 46,48,54,56 in the throttle body 12 and the air horn 24 respectively and thread into the apertures 50,52 in the manifold to secure the manifold, throttle body and air horn together, to thereby secure the assembly of throttle body and air horn to the engine. The pairs of apertures 46,48 are symmetrically arranged on either side of a plane P which is aligned with the longitudinal axis Y of the shaft 14 and the longitudinal axis X of the bore 38. The distance A between each aperture of each pair of apertures 46,48 is greater than the distance B between the pairs of apertures themselves. This arrangement is such that the throttle body 12 can be rotated through 180° from the position shown in Figure 1 either about longitudinal axis X or about longitudinal axis Y and still be secured to the engine, thereby easily providing a number of variations in the positions of the throttle linkage 20, throttle position sensor 26, idle air control valve assembly 28, and fluid heating means 34 relative to the engine. This arrangement can be modified by making distances A and B the same, that is, the apertures 46,48 are equidistantly spaced apart, in which case the throttle body 12 can be rotated through 90° about longitudinal axis X to further increase the number of variations of relative positioning.

Alternatives to the above arrangement include having a single aperture on each side of plane P, with the apertures being diametrically opposed relative to the longitudinal axis X of the bore 38. Further the securing means could simply connect the throttle body 12 to the manifold 22, with a separate securing arrangement (for example, spring clips or bolts) securing the air horn 24 to the throttle body Further still, the securing means could comprise bolts which each extend through the apertures in the air horn 24, throttle body 12, and manifold 22 and make a threaded connection with a nut or a threaded aperture in the engine.

On securing the air horn 24 to the throttle body 12, a seal (not shown) is preferably positioned between these two parts with the seal being positioned in a circumferentially extending groove in the end face 90 of the air horn.

The throttle body 12 also has a closed bore 60 formed therein which opens through the outer wall 40 and which preferably extends substantially parallel to the shaft 14; and first and second idle air bores 62,64 which are spaced apart, extend through the throttle body from one end face to the other 35,37 substantially parallel to the bore 38, and open into the closed bore. The idle air control valve assembly 28 comprises an idle air control valve seat 66 which is formed separately and positioned in the closed bore 60 between the openings to the first and second idle air bores 62,64; an idle air control valve 68 which is movable towards and away from the idle air control valve seat; and an electric motor 70 which is attached to and moves the idle air control valve, and which is positioned at the opening to the closed bore. The electric motor 70 is secured to the outer wall 40 of the throttle body 12 by a bracket 72 which substantially surrounds the end of the electric motor remote from the idle air control valve 68, and which is fastened to the outer wall by screws 74. An elastomeric seal 76 is positioned between a shoulder on the electric motor 70 and the outer wall 40 at the opening to the closed bore 60 to provide a seal between the closed bore and the electric motor. Also, a compliant cushion (not shown) may be placed between the bracket 72 and the electric motor 70 to reduce vibrations to the electric motor. In use, one end of the first idle air bore 62 aligns with and opens into one of two substantially identical openings 78,80 in the air horn 24, dependent on the position of the throttle body 12 relative to the engine. The air horn 24 has a bore 82 therethrough which aligns with the bore 38 in the throttle body 12 when the throttle body and air horn are secured together. One of the openings 78,80 provides an air passage from the bore 82 through the air horn 24 to the first idle air bore 62. The other of the openings 78,80 is closed by a portion 91 of the end face 35 of the throttle body 12 when the air horn 24 is secured thereto. The other end of the first idle air bore 62 is closed by the end face 84 of the manifold 22 when the throttle body 12 is secured to the manifold. Also, in use, one end of the second idle air bore 64 aligns with and opens into a corresponding opening 86 in the manifold 22. The manifold 22 has a bore 88 therethrough which aligns with the bore 38 in the throttle body 12 when the throttle body and manifold are secured together. The opening 86 provides an air passage from the second idle air bore 64 to the bore 88 in the manifold 22. The other end of the second idle air bore 64 is closed by the end face 90 of the air horn 24 when the throttle body 12 is secured to the air horn. This arrangement provides an idle air passage for the flow of air from the bore 82 in the air horn 24 to the bore 88 in the manifold 22 (by way of idle air bores 62,64 and closed bore 60) irrespective of the position of the flap valve 16. The position (two positions are shown in Figure 1, one of them in dashed outline) of the idle air control valve 68 relative to the idle air control valve seat 66, which is controlled by the electric motor 70, controls the flow of air through the idle air passage. This arrangement allows easy formation of the idle air passage without the need for subsequent plugging of bores in the throttle body. Although the idle air control valve seat is shown as being formed separately from the throttle body, it could be formed integrally with the throttle body.

The throttle position sensor 26 is secured to the outer wall 40 by screws 94 which pass through apertures in the housing 92 of the sensor, and which are positioned diametrically opposed relative to the longitudinal axis Y of the shaft 14. With this arrangement, the throttle position sensor 26 can be secured to the throttle body 12 in one of two positions, one as shown in Figure 4, the other position being 180° therefrom.

The fluid heating means 34 comprises a recess 96 formed in the outer wall 40 of the throttle body 12 which is covered by a plate member 98 secured, as described in more detail below, to the outer wall. An elastomeric seal 100 is positioned between the plate member 98 and the outer wall 40 around the recess 96 to substantially prevent egress of fluid. An inlet pipe 102 and an outlet pipe 104 (the connections to which could be reversed) extend through the plate member 98 to allow fluid to flow through the inlet pipe into the recess 96 and out through the outlet pipe. This arrangement allows fluid (usually from the engine cooling system) to heat the throttle body 12 to prevent the flap valve 16 sticking in extreme cold conditions due to ice formation. The plate member 98, inlet pipe 102 and outlet pipe 104 are preferably integrally formed in one piece. The arrangement for securing the plate member 98 to the outer wall 40 comprises a number of indentations 106 formed in the peripheral edge 108 of the plate member 98 and a pair of screws 110. The screws 110 have a threaded shank 112 which screw threads into corresponding threaded bores 114 in the outer wall 40 of the throttle body 12, and a head 116. The shape of the indentations 106 corresponds to the shape of a portion of the head 116 of each screw 110 to locate the screw head in the indentation to thereby determine the orientation of the plate member 98 relative to the throttle body 12, and hence determine the positioning of the inlet and outlet pipes 102,104 relative to the throttle body. With this arrangement, the orientation of the fluid heating means 34 relative to the throttle body 12 can easily be adjusted. The arrangement shown in Figure 5 shows four indentations 106 in the plate member 98. However it will be appreciated that any number of indentations could be used. The indentations 106 are preferably equidistantly spaced around the peripheral edge 108 of the plate member 98. Although two screws 110 are shown, it will be appreciated that one of these screws could be replaced by a lip formed in the outer wall 40 under which the peripheral edge 108 of the plate member 98 can be slid to retain the plate member, the sole remaining screw then completing the mounting of the plate member. As a further alternative, the indentations may be omitted, with the screw heads acting directly on any point around the peripheral edge 108 of the plate member 98.

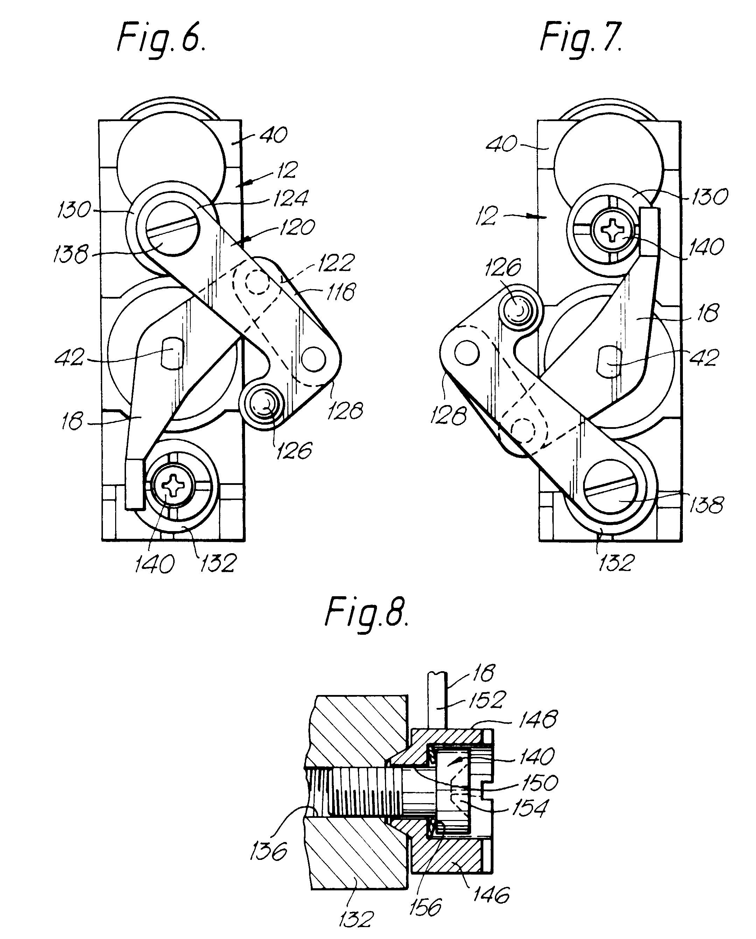

The throttle linkage 20 and lever arm 18 as shown are commonly referred to as a four-bar link, although other forms of throttle linkage could be used. The throttle linkage 20 comprises first and second arms 118,120 (Figure 6). The first arm 118 is pivotally connected at one end to one end 122 of the lever arm 18. The second arm 120 is substantially L-shaped (although other shapes may be used) and is pivotally connected at one end 124 to the outer wall 40 of the throttle body 12, has a connection stub 126 at the other end to which a throttle cable (not shown) can be attached, and is pivotally connected between its ends, at the elbow 128 of the L-shape, to the other end of the first arm 118. The pivotal connection of the one end 124 of the second arm 120 to the outer wall 40 is at one of two positions on the outer wall, each of which is defined by a boss 130,132. The bosses 130,132 are formed in the outer wall 40 at positions which are diametrically opposed about the longitudinal axis Y of the shaft 14. Each boss 130,132 has a threaded bore 134,136 formed therein which receives a threaded screw 138,140. The threaded bores 134,136 are substantially identical. One of the screws 138 passes through an aperture in the one end 124 of the second arm 120 to provide the pivotal connection of the throttle linkage 20 to the throttle body 12. It will be appreciated that the positioning of the throttle linkage 20 relative to the throttle body 12 can easily be reversed to the arrangement shown in Figure 7 simply by screwing the screw 138 into the threaded bore 136 in boss 132, rather than into the threaded bore 134 in boss 130, thereby allowing the direction of the throttle cable to be reversed. As an alternative to the use of threaded screws 138,140, one of the bosses may have a rod extending therefrom, and the throttle linkage 20 may be pivotally secured in place on the rod by a detachable circlip or other suitable fastening means. In this case, the rod may be attached to the required boss by screw threading into one of the threaded bores 134,136 or by a push fit into an unthreaded bore.

A coil spring 142 acts on the lever arm 18, and a coil spring 144 acts on the second arm 120 to bias the flap valve 16 towards its substantially closed (idle) position as is well known in the art. The lever arm 18 may have a stop member (not shown) formed thereon adjacent the one end 122 of the lever arm which projects towards the throttle body 12 and which is engageable with the boss 132 (Figure 6, or boss 138 in Figure 7) to prevent the flap valve 16 passing beyond its fully open position.

The screw 140 forms part of the idle adjust means 30 of the throttle mechanism 10, along with a cam 146. The cam 146 has a substantially circular (cylindrical) outer surface 148 and the screw 140 passes through an off-centre aperture 150 in the cam to be screwed into the threaded bore 136 in boss 132 (Figure 6) or the threaded bore 134 in boss 130 (Figure 7). The other end 152 of the lever arm 18 is biased (by the coil springs 142,144) into engagement with the surface 148 of the cam 146 to set the substantially closed (idle) position of the flap valve 16. This position can be adjusted simply by slightly unthreading the screw 140, rotating the cam 146 relative to the screw, and then re-tightening the screw. The cam 146 is substantially cup-shaped, and the head 154 of the screw 140 is positioned inside the cup with a Belleville spring 156 or similar acting between the head and the cam. This design of idle adjust means 30 can be made tamperproof by placing a plug inside the cup to prevent access to the screw head 154. As an alternative to this arrangement, the cam may have an oval shaped outer surface. Other forms of idle adjust means known to those skilled in the art may be used, although the above described arrangement makes use of features already formed on the outer wall 40 of the throttle body 12, without resorting to having to add special boss(es) to receive the idle adjust means 30 or resorting to additional machining operations.

The various features of the throttle mechanism described above allow the positioning of the various elements relative to the engine to be easily adjusted, thereby allowing greater flexibility in the use of a single throttle mechanism. The two part arrangement of the throttle body and air horn allow material variations. For example, the air horn may be formed from plastics material, with the throttle body formed from cast aluminium. In this case, the seal between the air horn and the throttle body may be integrally formed with the air horn.

Reference is made to our related patent applications, nos. 0628712 A; 0628713 A; and 0628710 A, filed the same day as the present application, having the reference nos. MJD/560; MJD/561; and MJD/562 respectively, and claiming priority from GB patent application nos. 9311882.6; 9311881.8; and 9311883.4 respectively.

## Claims

1. A throttle mechanism (10) for an engine of a motor vehicle comprising a throttle body (12) having an inner wall (36) defining a bore (38) extending therethrough and an outer wall (40), the bore having a longitudinal axis (X); a shaft (14) extending across the bore and having a longitudinal axis (Y) substantially perpendicular to the longitudinal axis of the bore, the shaft being rotatably mounted in the inner wall of the throttle body for pivotal movement about the longitudinal axis of the shaft, at least one end (42) of the shaft passing through the inner wall to extend beyond the outer wall; a flap valve (16) secured to the shaft inside the bore for movement between a fully open position and a substantially closed position on rotation of the shaft; means (18,20) secured to the said one end of the shaft adjacent the outer wall for rotating the shaft; and an air horn (24) securable to the throttle body for the passage of air into the throttle body; the throttle body having a pair of end faces (35,37) which are substantially identical to one another; characterised in that the throttle body (12) has two apertures (46,48) passing therethrough from one end face (35) to the other (37) through which securing means (58) can extend to secure the throttle body to the engine, the apertures having a longitudinal axis which is substantially parallel to the longitudinal axis of the bore, and the apertures being diametrically opposed relative to the longitudinal axis of the bore; and in that the throttle body (12) comprises first and second idle air bores (62,64) which extend through the throttle body from one end face to the other (35,37) substantially parallel to the longitudinal axis (X) of the bore (38) and which are spaced apart, one end of the first idle air bore at one end face being closed on securing the throttle mechanism (10) to the engine, and one end of the second idle air bore at the other end face being closed on securing the air horn (24) to the throttle body, the throttle mechanism further comprising idle air flow control means (26) for controlling flow of idle air through the first and second idle air bores.

2. A throttle mechanism as claimed in Claim 1, wherein the throttle body (12) has two pairs of apertures (46,48) passing therethrough from one end face to the other (35,37) through which the securing means (58) can extend to secure the throttle body to the engine, the pairs of apertures being symmetrical about a plane (8) aligned with the longitudinal axes (X,Y) of the shaft (14) and the bore (38).

3. A throttle mechanism as claimed in Claim 2, wherein the apertures (46,48) of the pairs of apertures are equidistantly spaced apart.

4. A throttle mechanism as claimed in any one of Claims 1 to 3, wherein the air horn (24) has corresponding apertures (54,56), and wherein the securing means (58) also secures the air horn to the throttle body (12).

5. A throttle mechanism as claimed in any one of Claims 1 to 4, wherein the throttle body (12) has a closed bore (60) formed therein which opens through the outer wall (40), which extends substantially parallel to the longitudinal axis (Y) of the shaft (14), and which opens into the first and second idle air bores (62,64), and wherein the idle air flow control means (26) comprises an idle air control valve seat (66) positioned in the closed bore between the openings to the first and second idle air bores; an idle air control valve (68) movable into and out of engagement with the idle air control valve seat; and an opening (78,80) in the air horn (24) which aligns with the other end of the first idle air bore (62).

6. A throttle mechanism as claimed in Claim 5, wherein the idle air control valve seat (66) is separately formed and is mounted in the closed bore.

7. A throttle mechanism as claimed in Claim 5 or Claim 6, wherein the idle air control valve (68) is moved by an electric motor (70) secured to the outer wall (40) of the throttle body (12).

## Patentansprüche

1. Drosselmechanismus (10) für einen Motor eines Kraftfahrzeugs, umfassend einen Drosselkörper (12) mit einer Innenwand (36), die eine sich dort hindurch erstreckende Bohrung (38) definiert, und einer Außenwand (40), wobei die Bohrung eine Längsachse (X) aufweist; eine Welle (14), die sich durch die Bohrung erstreckt und eine Längsachse (Y) aufweist, die im wesentlichen senkrecht zu der Längsachse der Bohrung liegt, wobei die Welle in der Innenwand des Drosselkörpers für eine Schwenkbewegung um die Längsachse der Welle drehbar angebracht ist und zumindest ein Ende (42) der Welle durch die Innenwand verläuft und sich über die Außenwand erstreckt; ein Klappenventil (16), das an der Welle innerhalb der Bohrung für eine Bewegung zwischen einer vollständig offenen Position und einer im wesentlichen geschlossenen Position bei Drehung der Welle befestigt ist; Mittel (18, 20), die an dem einen Ende der Welle benachbart der Außenwand zum Drehen der Welle befestigt sind; und einen Luftstutzen (24), der an dem Drosselkörper für einen Luftdurchgang in den Drosselkörper befestigbar ist; wobei der Drosselkörper ein Paar Endflächen (35, 37) aufweist, die im wesentlichen identisch zueinander sind;
dadurch **gekennzeichnet**,
daß der Drosselkörper (12) zwei Öffnungen (46, 48) aufweist, die durch diesen von einer Endfläche (35) zu der anderen (37) verlaufen, durch die sich ein Befestigungsmittel (58) erstrecken kann, um den Drosselkörper an dem Motor zu befestigen, wobei die Öffnungen eine Längsachse aufweisen, die im wesentlichen parallel zu der Längsachse der Bohrung verläuft, und die Öffnungen diametral gegenüberliegend relativ zu der Längsachse der Bohrung angeordnet sind; und daß der Drosselkörper (12) erste und zweite Leerlaufluftbohrungen (62, 64) aufweist, die sich durch den Drosselkörper von einer Endfläche zu der anderen (35, 37) im wesentlichen parallel zu der Längsachse (X) der Bohrung (38) erstrecken und die voneinander beabstandet sind, wobei ein Ende der ersten Leerlaufluftbohrung an einer Endfläche beim Befestigen des Drosselmechanismus (10) an dem Motor geschlossen wird, und ein Ende der zweiten Leerlaufluftbohrung an der anderen Endfläche beim Befestigen des Luftstutzens (24) an dem Drosselkörper geschlossen wird, wobei der Drosselmechanismus ferner ein Leerlaufluftströmungsregelungsmittel (26) zum Regeln einer Leerlaufluftströmung durch die ersten und zweiten Leerlaufluftbohrungen aufweist.

2. Drosselmechanismus nach Anspruch 1, wobei der Drosselkörper (12) zwei Öffnungspaare (46, 48) aufweist, die durch diesen von einer Endfläche zu der anderen (35, 37) verlaufen, durch die sich das Befestigungsmittel (58) erstrecken kann, um den Drosselkörper an dem Motor zu befestigen, wobei die Öffnungspaare symmetrisch zu einer Ebene (P) liegen, die mit den Längsachsen (X, Y) der Welle (14) und der Bohrung (38) ausgerichtet ist.

3. Drosselmechanismus nach Anspruch 2, wobei die Öffnungen (46, 48) der Öffnungspaare gleich voneinander beabstandet sind.

4. Drosselmechanismus nach einem der Ansprüche 1 bis 3, wobei der Luftstutzen (24) entsprechende Öffnungen (54, 56) aufweist, und wobei das Befestigungsmittel (58) auch den Luftstutzen an dem Drosselkörper (12) befestigt.

5. Drosselmechanismus nach einem der Ansprüche 1 bis 4, wobei der Drosselkörper (12) eine darin ausgebildete geschlossene Bohrung (60) aufweist, die sich durch die Außenwand (40) öffnet, sich im wesentlichen parallel zu der Längsachse (Y) der Welle (14) erstreckt, und die sich in die ersten und zweiten Leerlaufluftbohrungen (62, 64) öffnet, und wobei das Leerlaufluftströmungsregelungsmittel (26) eine Leerlaufluftregelungsventilaufnahme (66) umfaßt, die in der geschlossenen Bohrung zwischen den Öffnungen zu den ersten und zweiten Leerlaufluftbohrungen positioniert ist; ein Leerlaufluftregelungsventil (68) umfaßt, das in und aus dem Eingriff mit der Leerlaufluftregelungsventilaufnahme bewegbar ist; und eine Öffnung (78, 80) in dem Luftstutzen (24) umfaßt, die mit dem anderen Ende der ersten Leerlaufluftbohrung (62) ausgerichtet ist.

6. Drosselmechanismus nach Anspruch 5, wobei die Leerlaufluftregelungsventilaufnahme (66) separat ausgebildet und in der geschlossenen Bohrung angebracht ist.

7. Drosselmechanismus nach Anspruch 5 oder Anspruch 6, wobei das Leerlaufluftregelungsventil (68) durch einen Elektromotor (70) bewegt wird, der an der Außenwand (40) des Drosselkörpers (12) befestigt ist.

## Revendications

1. Mécanisme à papillon ou à étranglement (10) pour un moteur d'un véhicule à moteur comprenant un corps d'étranglement (12) présentant une paroi interne (36) définissant un alésage (38) s'étendant à travers celle-ci et une paroi externe (40), l'alésage possédant un axe longitudinal (X) ; un arbre (14) s'étendant à travers l'alésage et possédant un axe longitudinal (Y) sensiblement perpendiculaire à l'axe longitudinal de l'alésage, l'arbre étant monté de manière à pouvoir tourner dans la paroi interne du corps d'étranglement pour permettre un mouvement de pivotement autour de l'axe longitudinal de l'arbre, au moins une extrémité (42) de l'arbre traversant la paroi interne pour s'étendre au-delà de la paroi externe ; un papillon (16) fixé sur l'arbre à l'intérieur de l'alésage pour permettre un mouvement entre une position totalement ouverte et une position sensiblement fermée lorsque l'arbre est en rotation ; des moyens (18, 20) fixés sur ladite une extrémité de l'arbre adjacente à la paroi externe pour faire tourner l'arbre ; et une tubulure d'air (24) pouvant être fixée sur le corps d'étranglement pour assurer le passage de l'air dans le corps d'étranglement ; le corps d'étranglement possédant deux faces d'extrémité (35, 37) qui sont sensiblement identiques l'une à l'autre ; caractérisé en ce que le corps d'étranglement (12) présente deux ouvertures (46, 48) qui le traversent depuis une face d'extrémité (35) jusqu'à l'autre (37) à travers lesquelles des moyens de fixation (58) peuvent s'étendre afin de fixer le corps d'étranglement au moteur, les ouvertures présentant un axe longitudinal qui est sensiblement parallèle à l'axe longitudinal de l'alésage, et les ouvertures étant diamétralement opposées par rapport à l'axe longitudinal de l'alésage ; et en ce que le corps d'étranglement (12) comprend des premier et second alésages d'air du ralenti (62, 64) qui s'étendent à travers le corps d'étranglement depuis une face d'extrémité jusqu'à l'autre (35, 37), sensiblement parallèles à l'axe longitudinal (X) de l'alésage (38) et qui sont espacés l'un de l'autre, une extrémité du premier alésage d'air du ralenti étant fermée au niveau d'une face d'extrémité lors de la fixation du mécanisme à étranglement (10) sur le moteur, et une extrémité du second alésage d'air du ralenti étant fermée au niveau de l'autre face d'extrémité lors de la fixation de la tubulure d'air (24) sur le corps d'étranglement, le mécanisme à étranglement comprenant en outre des moyens de commande de débit d'air du ralenti (26) afin de commander le débit de l'air du ralenti dans les premier et second alésages d'air du ralenti.

2. Mécanisme à étranglement selon la revendication 1, dans lequel le corps d'étranglement (12) présente deux paires d'ouvertures (46, 48) qui le traversent depuis une face d'extrémité jusqu'à l'autre (35, 37) à travers lesquelles les moyens de fixation (58) peuvent s'étendre afin de fixer le corps d'étranglement au moteur, les paires d'ouvertures étant disposées symétriquement autour d'un plan (8) aligné avec les axes longitudinaux (X, Y) de l'arbre (14) et de l'alésage (38).

3. Mécanisme à étranglement selon la revendication 2, dans lequel les ouvertures (46, 48) des paires d'ouvertures sont espacées de manière équidistante.

4. Mécanisme à étranglement selon l'une quelconque des revendications 1 à 3, dans lequel la tubulure d'air (24) présente des ouvertures correspondantes (54, 56), et dans lequel les moyens de fixation (58) fixent également la tubulure d'air au corps d'étranglement (12).

5. Mécanisme à étranglement selon l'une quelconque des revendications 1 à 4, dans lequel le corps d'étranglement (12) présente un alésage fermé (60) formé à l'intérieur de celui-ci qui débouche dans la paroi externe (40), qui s'étend sensiblement parallèle à l'axe longitudinal (Y) de l'arbre (14) et qui débouche dans les premier et second alésages d'air du ralenti (62, 64), et dans lequel les moyens de commande de débit d'air du ralenti (26) comprennent un siège de soupape de commande d'air du ralenti (66) positionné dans le second alésage fermé entre les ouvertures débouchant dans les premier et second alésages d'air du ralenti ; une soupape de commande d'air du ralenti (68) pouvant être déplacée pour être mise en prise avec le siège de la soupape de commande d'air du ralenti et en être désolidarisée ; et une ouverture (78, 80) dans la tubulure d'air (24) qui est alignée avec l'autre extrémité du premier alésage d'air du ralenti (62).

6. Mécanisme à étranglement selon la revendication 5, dans lequel le siège (66) de la soupape de commande d'air du ralenti est formé séparément et est monté dans l'alésage fermé.

7. Mécanisme à étranglement selon la revendication 5 ou la revendication 6, dans lequel la soupape de commande d'air du ralenti (68) est déplacée par un moteur électrique (70) fixé sur la paroi externe (40) du corps d'étranglement (12).
